(19) Europäisches Patentamt / European Patent Office / Office européen des brevets

(11) **EP 4 317 880 A1**

(12) **EUROPEAN PATENT APPLICATION**
published in accordance with Art. 153(4) EPC

(43) Date of publication:
**07.02.2024 Bulletin 2024/06**

(21) Application number: **22775745.7**

(22) Date of filing: **24.03.2022**

(51) International Patent Classification (IPC):
**F27D 19/00** *(2006.01)* **C01B 32/162** *(2017.01)*

(52) Cooperative Patent Classification (CPC):
**C01B 32/162; F27D 19/00**

(86) International application number:
**PCT/JP2022/013842**

(87) International publication number:
**WO 2022/202964 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2021 JP 2021054021**

(71) Applicant: **Matsukawa, Yuji
Fuchu-shi, Tokyo, 183-0014 (JP)**

(72) Inventor: **Matsukawa, Yuji
Fuchu-shi, Tokyo, 183-0014 (JP)**

(74) Representative: **J A Kemp LLP
80 Turnmill Street
London EC1M 5QU (GB)**

(54) **MANUFACTURING METHOD AND MANUFACTURING DEVICE FOR CARBON NANOTUBE**

(57) To provide a method for manufacturing carbon nanotubes and a carbon nanotube manufacturing device capable of manufacturing carbon nanotubes with a high yield. A first manufacturing device 100 mainly includes a mass flow controller 110, a growth furnace 120, a quartz tube 130, a pressure gauge 150, an electromagnetic valve 160, a pressure adjustment valve 170, and a needle valve 180. The quartz tube 130 is a cylindrical tube made of quartz, and is inserted into the growth furnace 120. The inside of the growth furnace 120 can be adjusted to a temperature suitable for the thermal decomposition temperature of each raw material resin. The pressure gauge 150 is connected to an outlet pipe 104 extending from an outlet end of the quartz tube 130. The electromagnetic valve 160 receives a pressure value from the pressure gauge 150, and opens/closes a pipe 106 according to the pressure value. The raw material resin 144 is placed near an inlet end of the growth furnace 120. A catalyst metal 142 is placed at a position separated by a predetermined distance from the inlet end of the growth furnace 120.

Fig. 1

**Description**

Technical Field

The present invention relates to a method for manufacturing carbon nanotubes and a carbon nanotube manufacturing device.

Background Art

There is known a method for manufacturing carbon nanotubes in which a metal-containing nanofiber formed of a mixture of a nanofiber composed of an organic polymer and a catalyst metal is charged in a heating container, in the state, the heating container is irradiated with electromagnetic wave energy to be heated, thereby the metal-containing nanofiber is heated, and as a result, carbon nanotubes containing a metal are produced with the use of the nanofiber as a carbon source. There are two types of metal-containing nanofibers; and one is a nanofiber of which the surface is coated with a metal, and another is a nanofiber which contains nanoparticles of a metal. A metal-containing nanofiber in which the surface of the nanofiber is coated with a metal is produced by a general metal coating method, for example, a vacuum deposition method of coating the nanofiber with the metal. A metal-containing nanofiber in which metal nanoparticles are contained in a nanofiber is produced by an electrospinning method which uses a suspension liquid that contains metal nanoparticles and a material resin of the nanofiber, for example, a suspension liquid in which metal nanoparticles are dispersed in a solution in which a material resin of the nanofiber is dissolved in a solvent, as a raw material. A yield of the carbon nanotubes has been about 4% (Patent Literature 1).

Citation List

Patent Literature

Patent Literature 1

Japanese Patent Laid-Open No. 2010-269996 Specification

Summary of Invention

Technical Problem

However, when the yield of the carbon nanotubes is as low as about 4%, the production cost per unit time and unit mass of the obtained carbon nanotubes increases.
The present invention has been made in view of the above problems, and an object thereof is to provide a method for manufacturing carbon nanotubes and a carbon nanotube manufacturing device capable of manufacturing carbon nanotubes with a high yield.

Solution to Problem

A method for manufacturing carbon nanotubes according to a first aspect of the present invention includes: a raw material vaporization step of vaporizing a resin to obtain a carbon-containing gas; a catalyst sublimation step of sublimating a catalyst metal to obtain a catalyst gas; a contacting step of bringing the catalyst gas into contact with the carbon-containing gas; and a control step of keeping a pressure of a space in which the carbon-containing gas and the catalyst gas exist, within a predetermined range.
It is preferable to further include a form change step of thermally decomposing the catalyst gas to change a form thereof into fine catalyst metal particles.
It is preferable that in the contacting step, carbon nanotubes are grown by a chemical vapor deposition method.
It is preferable that in the raw material vaporization step, the resin is vaporized in a raw material vaporization section; in the catalyst sublimation step, the catalyst metal is sublimated in a catalyst sublimation section; the space is a growth section; and in the control step, a carrier gas is introduced into the raw material vaporization section, the catalyst sublimation section and the growth section, and a pressure in the growth section is kept within a predetermined range.
It is preferable that in the raw material vaporization step, the resin is heated at a temperature corresponding to the resin, and in the catalyst sublimation step, the catalyst metal is heated at a temperature corresponding to the catalyst metal to sublimate the catalyst metal.
It is preferable that in the contacting step, a wall surface forming the space is heated to a predetermined temperature, and the carbon nanotubes grow on the wall surface.

It is preferable that in a contacting and growing step, a substrate placed in the space is heated to a predetermined temperature, and the carbon nanotubes grow on the substrate.

It is preferable that the catalyst metal is an organometallic molecule containing Fe, Ni, Co, or a combination thereof.

It is preferable that the raw material resin is any of polyethylene (PE), polypropylene (PP), acrylonitrile-butadiene-styrene (ABS), polystyrene (PS), polylactic acid (PLA), polycarbonate (PC), polyimide (PI), polyethylene terephthalate (PET), polyvinyl chloride (PVC), or a combination thereof.

It is preferable that the carbon nanotubes are multi-walled, and carbon nanotubes in an amount of 1 mass% or more and 81 mass% or less based on the resin grow.

A carbon nanotube manufacturing device according to a second aspect of the present invention includes: a raw material vaporization section that vaporizes a resin to obtain a carbon-containing gas; a catalyst sublimation section that sublimates a catalyst metal to obtain a catalyst gas; a growth section that brings the catalyst gas into contact with the carbon-containing gas; and a control section that keeps a pressure in the growth section within a predetermined range.

It is preferable that the growth section thermally decomposes the catalyst gas to change a form thereof into fine catalyst metal particles.

It is preferable that the growth section grows carbon nanotubes by a chemical vapor deposition method.

It is preferable that the control section introduces a carrier gas into the raw material vaporization section, the catalyst sublimation section and the growth section, and keeps a pressure in the growth section within a predetermined range.

It is preferable that the growth section is provided downstream of the raw material vaporization section and the catalyst sublimation section.

It is preferable that the control section includes a pressure sensor that detects an internal pressure of the growth section, and a valve that adjusts the internal pressure of the growth section.

It is preferable that in the contacting step, a wall surface forming the growth section is heated to a predetermined temperature, and the carbon nanotubes grow on the wall surface.

It is preferable that in the contacting step, a substrate placed in the growth section is heated to a predetermined temperature, and the carbon nanotubes grow on the substrate.

It is preferable that the catalyst metal is an organometallic molecule containing Fe, Ni, Co, and a combination thereof.

It is preferable that the resin is any of polyethylene (PE), polypropylene (PP), acrylonitrile-butadiene-styrene (ABS), polystyrene (PS), polylactic acid (PLA), polycarbonate (PC), polyimide (PI), polyethylene terephthalate (PET), polyvinyl chloride (PVC), and a combination thereof.

It is preferable that the carbon nanotubes are multi-walled, and the carbon nanotubes in an amount of 1 mass% or more and 81 mass% or less based on the resin grow.

Advantageous Effects of Invention

According to the present invention, provided are a method for manufacturing carbon nanotubes and a carbon nanotube manufacturing device capable of manufacturing carbon nanotubes with a high yield.

Brief Description of Drawings

[Figure 1] Figure 1 is a schematic view of a first manufacturing device according to a first embodiment of the present invention.
[Figure 2] Figure 2 is a graph showing an FTIR spectrum of a carbon-containing gas.
[Figure 3] Figure 3 is a graph showing an FTIR spectrum of a carbon-containing gas.
[Figure 4] Figure 4 is a graph showing an FTIR spectrum of a carbon-containing gas.
[Figure 5] Figure 5 is a graph showing an FTIR spectrum of a carbon-containing gas.
[Figure 6] Figure 6 is a graph showing a growth rate of a carbon nanotube.
[Figure 7] Figure 7 is an electron micrograph of a produced carbon nanotube.
[Figure 8] Figure 8 is a graph showing a Raman spectrum of a produced carbon nanotube.
[Figure 9] Figure 9 is a graph showing an $I_g/I_d$ ratio of a produced carbon nanotube.
[Figure 10] Figure 10 is a schematic view of a second manufacturing device according to a second embodiment.
[Figure 11] Figure 11 is a schematic view of a third manufacturing device according to a third embodiment.
[Figure 12] Figure 12 is a schematic view of a fourth manufacturing device according to a fourth embodiment.

[Figure 13] Figure 13 is an electron micrograph of a produced carbon nanotube.
[Figure 14] Figure 14 is an electron micrograph of a produced carbon nanotube.

Description of Embodiments

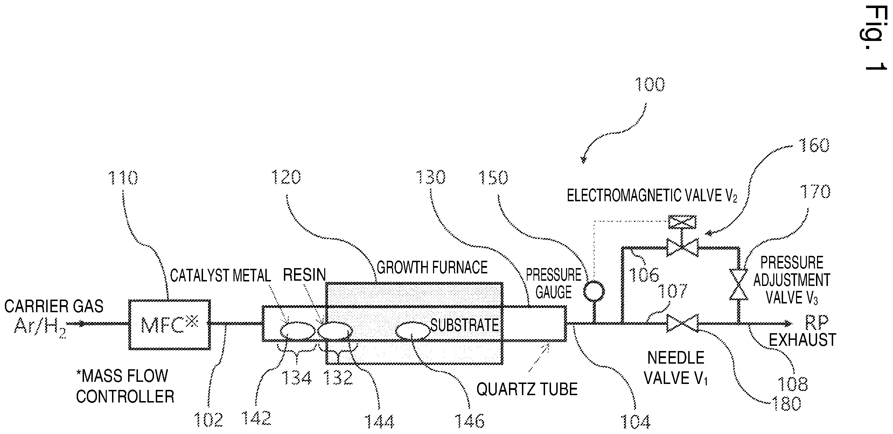

A first manufacturing device 100 and a manufacturing method according to a first embodiment of the present invention will be described below with reference to Figures 1 to 9.

Referring to Figure 1, the first manufacturing device 100 mainly includes a mass flow controller 110, a growth furnace (growth section) 120, a quartz tube 130, a pressure gauge 150, an electromagnetic valve 160, a pressure adjustment valve 170, and a needle valve 180.

The mass flow controller 110 sends a carrier gas to the quartz tube 130 at a desired flow rate through an inlet pipe 102. As the carrier gas, for example, an argon/hydrogen ($Ar/H_2$) mixture gas or a pure argon gas is used.

The inner part of the growth furnace 120 can be adjusted to an arbitrary temperature, for example, from 500°C to 900°C, and as one example, product name ARF-30K manufactured by Asahi-rika Co., Ltd. is used.

The quartz tube 130 is a cylindrical tube made of silica having an outer diameter of 40 mm, an inner diameter of 36 mm, a radial thickness of 2 mm, and a length of 570 mm, and is inserted into the growth furnace 120. An inlet end and an outlet end of the quartz tube 130 protrude from the inlet end and the outlet end of the growth furnace 120, respectively, by a predetermined length. Note that in this specification, the inner part of the quartz tube 130 inside the growth furnace 120 is also referred to as inside the growth furnace 120.

The pressure gauge 150 is connected to an outlet pipe 104 which extends from the outlet end of the quartz tube 130, measures a pressure in an inner part of the quartz tube 130, preferably in a region in which the carbon nanotube grows, and transmits the pressure value to the electromagnetic valve 160. The outlet pipe 104 is connected to the pressure gauge 150, and then branched into two directions; and one pipe 106 is connected to the electromagnetic valve 160, and the other pipe 107 is connected to the needle valve 180. Note that the pressure gauge 150 measures a pressure of the connected portion with the outlet pipe 104, but this portion is connected to the inner part of the quartz tube 130, particularly a region in which the carbon nanotube is grown, without passing through a structure for increasing or decreasing the pressure, and accordingly, the pressure of the portion is substantially the same as the pressure of the inner part of the quartz tube 130 and the region in which the carbon nanotube is grown.

The electromagnetic valve 160 receives the pressure value from the pressure gauge 150, and opens/closes a pipe 106 according to the pressure value. In the pipe 106, the pressure adjustment valve 170 is connected to an outlet side of the electromagnetic valve 160.

The pressure adjustment valve 170 and the needle valve 180 can be arbitrarily opened and closed by a user. The outlet sides of the pressure adjustment valve 170 and the needle valve 180 are exhausted through an exhaust pipe 108. To the exhaust pipe 108, a negative pressure is applied from a negative pressure generating section such as a negative pressure pump which is provided in an outside. The pressure gauge 150, the electromagnetic valve 160, the pressure adjustment valve 170, and the needle valve 180 constitute the control section.

A substrate 146 is solid, is made of, for example, silicon, and is placed at the center in the longitudinal direction of the quartz tube 130.

A raw material resin 144 is a solid containing carbon atoms; is made of, for example, polyethylene (PE), polypropylene (PP), acrylonitrile-butadiene-styrene (ABS), polystyrene (PS), polylactic acid (PLA), polycarbonate (PC), polyimide (PI), polyethylene terephthalate (PET), polyvinyl chloride (PVC), or a mixture thereof; and is placed near the inlet end of the growth furnace 120, that is, at such a position as to slightly protrude from the inlet end of the growth furnace 120 in the quartz tube 130. The distance by which the raw material resin 144 protrudes from the inlet end of the growth furnace 120 is about 8 mm, and is determined according to the type of the raw material resin 144. In the present embodiment, one part in the quartz tube 130 constitutes the raw material vaporization section 132, which is one part of the growth furnace 120, and exists at such a position as to be capable of receiving such an extent of heat that the raw material resin 144 can vaporize, from the growth furnace 120. When the raw material resin 144 is polyethylene (PE), polypropylene (PP), acrylonitrile-butadiene-styrene (ABS), polystyrene (PS), polylactic acid (PLA), polyethylene terephthalate (PET), or polyvinyl chloride (PVC), the raw material vaporization section 132 is provided at such a portion that a thermal decomposition temperature becomes 400°C, and when the raw material resin is polycarbonate (PC) or polyimide (PI), the raw material vaporization section 132 is provided at such a portion that the thermal decomposition temperature becomes 800°C. Note that the above thermal decomposition temperature is one example, and may be not lower than a temperature at which the raw material resin 144 is vaporized and not higher than a temperature at which the carbon nanotube can grow; and is not limited to the above temperature, and may be, for example, 200°C or higher and 900°C or lower, 200°C or higher and 300°C or lower, 300°C or higher and 500°C or lower, or 500°C or higher and 900°C or lower. The temperature at which the carbon nanotube can grow is, for example, 800°C.

A catalyst metal 142 is a solid containing an organic metal compound and is made of, for example, ferrocene; and is placed in the quartz tube 130 at a position separated by a predetermined distance from the inlet end of the growth furnace 120. Ferrocene is preferably a product which is produced by FUJIFILM Wako Pure Chemical Corporation, and of which the number is 068-05982. The distance from the catalyst metal 142 to the inlet end of the growth furnace 120 is such an extent of a distance that the catalyst metal 142 can receive such an extent of heat that the catalyst metals 142 can sublimate, from the growth furnace 120, and is about 25 mm when the catalyst metal 142 is ferrocene. In the present embodiment, the catalyst sublimation section 134 is a portion outside the growth furnace 120 and inside the quartz tube 130 separated apart from the inlet end of the growth furnace 120 by such an extent of a distance that the catalyst metal 142 can receive such an extent of heat that the catalyst metal 142 can sublimate, from the growth furnace 120.

Next, a process for producing the carbon nanotube will be described, which includes one embodiment of the present invention. In all the steps of this process, a negative pressure is applied to the exhaust pipe 108.

Firstly, the substrate 146 is placed at the center in the longitudinal direction of the quartz tube 130, the raw material resin 144 is placed in the raw material vaporization section 132, and the catalyst metal 142 is placed in the catalyst sublimation section 134.

Next, a vacuum drawing process is performed. In this process, a flow rate of the mass flow controller 110 is set to 0 sccm, the pressure adjustment valve 170 and the needle valve 180 are opened, and the electromagnetic valve 160 is closed. Thereby, the gas is drawn from the inside of the quartz tube 130 through the exhaust pipe 108, and the pressure in the quartz tube 130 decreases. Then, the electromagnetic valve 160 is set so as to be automatically opened when a pressure value sent from the pressure gauge 150 becomes -15 kPa or larger with respect to the atmosphere, and so as to be automatically closed when the value becomes -20 kPa or smaller with respect to the atmosphere.

Next, a gas introduction and temperature raising process is performed. In this process, the flow rate in the mass flow controller 110 is set to 300 sccm, the pressure adjustment valve 170 is opened, and the electromagnetic valve 160 is closed. Then, the needle valve 180 is adjusted so that a pressure in the quartz tube 130 becomes -20 kPa. Thereby, the carrier gas $Ar/H_2$ is introduced into the quartz tube 130 and the electromagnetic valve 160 is kept closed. A concentration of the carrier gas $Ar/H_2$ in the quartz tube 130 is about 3%. Then, the temperature in the growth furnace 120 is raised. The raw material vaporization section 132 and the catalyst sublimation section 134 exist in the previously described places, and accordingly, receive the heat from the growth furnace 120; and the raw material resin 144 vaporizes to become a carbon-containing gas, and the catalyst metal 142 sublimates to become a catalyst gas.

Next, a growing process is performed. In this process, the needle valve 180 is maintained at the position which has been adjusted in the gas introduction and temperature raising process, and the pressure adjustment valve 170 is maintained in an opened state. As the temperature in the quartz tube 130 rises due to the heating of the growth furnace 120, the raw material resin 144 is thermally decomposed into a carbon-containing gas (raw material vaporization step). At this time, the catalyst metal 142 sublimates (catalyst sublimation step) and becomes fine catalyst metal particles in the space of the quartz tube 130, and on the inner wall of the quartz tube 130 and the surface of the substrate 146 (form change step). The carbon-containing gas and the fine catalyst metal particles react with each other to grow carbon nanotubes (contacting step). If only the carbon-containing gas comes into contact with the inner wall of the quartz tube 130 and the substrate 146, in an environment in which the fine catalyst metal particles do not exist, amorphous carbon grows and the production of the carbon nanotube is prevented. Thus, the fine catalyst metal particles are formed on the inner wall of the quartz tube 130 and/or the surface of the substrate 146, at the same time and/or before the formation of the carbon-containing gas. Here, "the same time" includes, in addition to exactly the same moment, a time period of 0 second to about 240 seconds, which is from the time when the catalyst gas has come in contact with the inner wall of the quartz tube 130 and the substrate 146, to the time when the carbon-containing gas comes in contact with the inner wall of the quartz tube 130 and the substrate 146. Along with the vaporization and sublimation of the raw material resin 144 and the catalyst metal 142, the pressure in the quartz tube 130 rises. Here, as previously described, the electromagnetic valve 160 is set so as to automatically open when the pressure value from the pressure gauge 150 becomes -15 kPa or larger with respect to the atmosphere, and so as to automatically close when the value becomes - 20 kPa or smaller with respect to the atmosphere. Because of this, when the pressure value measured by the pressure gauge 150 becomes -15 kPa or larger, the electromagnetic valve 160 automatically opens to lower the pressure in the quartz tube 130. In addition, when the pressure in the quartz tube 130 lowers to -20 kPa or smaller, the electromagnetic valve 160 automatically closes. In this way, the pressure in the quartz tube 130 is kept in a range of -15 kPa or higher and -20 kPa or lower. In the present embodiment, the state in which the pressure in the quartz tube 130 is in a range of -15 kPa or higher and -20 kPa or lower is referred to as the pressure in the quartz tube 130 being kept constant. When the solid such as the catalyst metal 142 and the raw material resin 144 is vaporized and sublimated, the pressure rises in the quartz tube 130, that is, in the closed space. Thereby, such a risk is caused that the quartz tube 130 is ruptured, but according to the present embodiment, the pressure in the quartz tube 130 is kept constant, and there is not such a risk that the quartz tube 130 is ruptured. In addition, when the pressure in the quartz tube 130 rises, there is a possibility that a sublimation amount and a vaporization amount of the catalyst gas and the carbon-containing gas decrease due to the saturated vapor pressure. On the other hand, when the pressure in the quartz tube 130 is excessively lowered, there is a possibility that the sublimation amount and the vaporization amount of the catalyst gas and the carbon-containing gas excessively increase due to the saturated vapor pressure. However, according to the present embodiment, the pressure in the quartz tube 130 is kept constant, accordingly, the catalyst gas and the carbon-containing gas can always be generated with constant amounts of sublimation and vaporization, and thereby high-quality carbon nanotubes can be produced. Note that when the carbon nanotube is generated with the use of only a gas such as a previously prepared catalyst gas and/or carbon-containing gas, it is also considered to adjust the pressure in the furnace and the amount of catalyst gas and/or carbon-containing gas, by controlling the inflow amount of the catalyst gas and/or the carbon-containing gas; but that in the present embodiment, a solid is used as the catalyst and/or the raw material, and the pressure in the furnace and the amount of catalyst gas and/or carbon-containing gas are adjusted by directly controlling the pressure in the quartz tube 130. When this growing process is executed for a predetermined period of time, the carbon nanotube is formed on the inner wall of the quartz tube 130 and the substrate 146.

When the generation of the carbon nanotube is to be terminated, the supply of the carbon-containing gas and the catalyst gas is simultaneously stopped by terminating the heating by the growth furnace 120. Thereby, the amorphous carbon is not produced, and only the carbon nanotube can be produced.

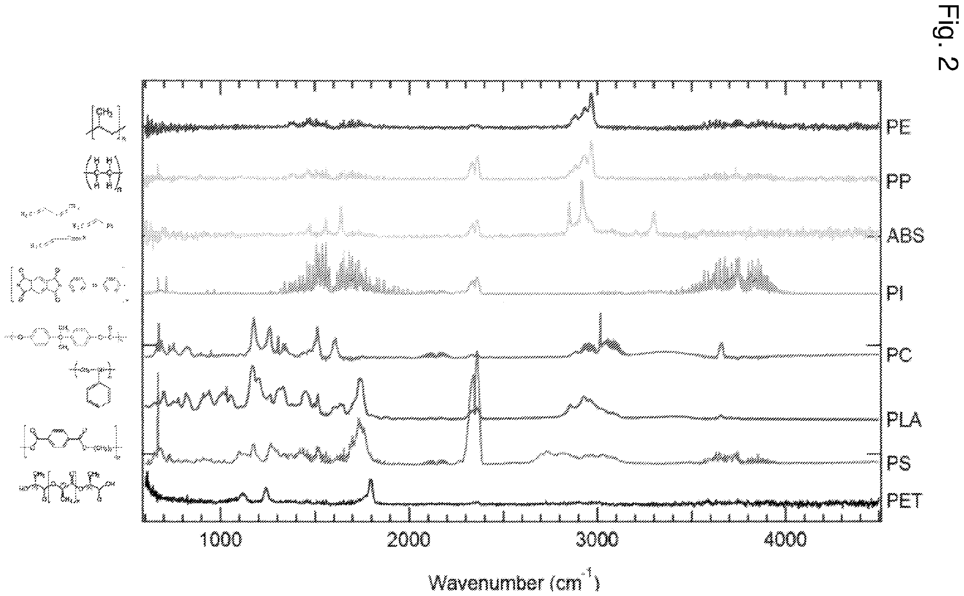

Next, the FTIR spectrum of the carbon-containing gas will be described with reference to Figures 2 to 5. As the raw material resins 144, experimental resin #11026 (low density PE) produced by SANPLATEC Corporation Ltd. was used for PE, a resin plate #PPN-050503 produced by AS ONE CORPORATION was used for PP, a filament for a 3D printer manufactured by Pxmalion com. was used for ABS, #PS2035-1 manufactured by HIKARI Co., Ltd. was used for PS, a filament for a 3D printer manufactured by Pxmalion com. was used for PLA, a commercially available transparent PET bottle was used for PET, a polyimide film #3-1966-02 (with thickness of 25 $\mu$m, and 100H) produced by AS ONE CORPORATION was used for PI, and #KPAC301-1 produced by HIKARI Co., Ltd. was used as PC. As the carrier gas, Ar/H$_2$ (3%) gas produced by Tomoe Shokai Co., Ltd. was used. The temperature was raised to 400°C for PE, PP, ABS, PS, PLA and PET, and to 800°C for PI and PC; and the FTIR spectrum was measured with the use of an industrial gas analyzer IG-1000 manufactured by Otsuka Electronics Co., Ltd.

Figure 2 shows the spectra of each carbon-containing gas in a region of wave numbers of 600 cm$^{-1}$ to 4500 cm$^{-1}$. In PE, PP, ABS, PC, PLA and PS, in other words, in the resins except PI and PET, peaks of CH$_2$ and CH$_3$ derived from alkane were observed in a band at a wave number of about 2900 cm$^{-1}$. In ABS, PI, PC and PS, a peak of a C-C bond derived from an aromatic ring was observed in a band at a wave number of about 1500 cm$^{-1}$ to 1600 cm$^{-1}$. In addition, in PLA and PET, peaks derived from C-O and C=O were observed.

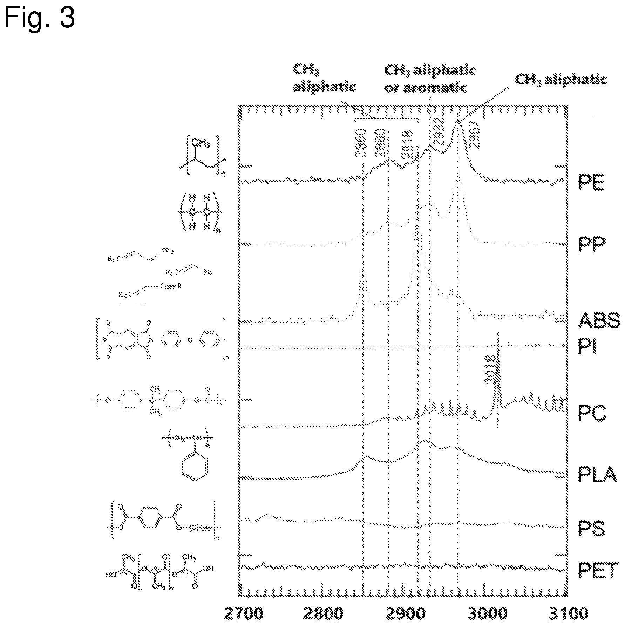

With the use of Figure 3, spectra of each of the carbon-containing gases in the region of wave numbers of 2700 cm$^{-1}$ to 3100 cm$^{-1}$ in Figure 2 are shown. In PE, PP, ABS, PC, PLA and PS, peaks originating from CH$_2$ of the alkyl chain appeared in the bands of 2860 cm$^{-1}$, 2880 cm$^{-1}$ and 2918 cm$^{-1}$, and peaks originating from CH$_3$ of the alkyl chain appeared in the bands of 2932 cm$^{-1}$ and 2967 cm$^{-1}$. In particular, in PE, PP, ABS and PS, clear peaks were observed at all of these wave numbers. In PE and PP, both peaks of CH$_2$ and CH$_3$ were observed, and it is considered from the above that PE and PP were decomposed into monomers of which the ends are terminated with CH$_3$, such as ethane, propane and butane. Here, PE does not originally contain CH$_3$, but it is considered that, upon thermal decomposition, a dangling bond is terminated by a proton generated at the time of the thermal decomposition, resulting in formation of CH$_3$. For the ABS, a peak originating from CH$_2$ were observed, and a peak intensity of the CH$_3$ was low. The reason why the peak originating from CH$_2$ was confirmed for ABS is considered to be because ABS is composed of acrylonitrile (C$_3$H$_3$N)-butadiene (CH$_2$=CH-CH=CH$_2$)-styrene (C$_8$H$_8$), and the terminals of these molecules have CH$_2$. Also for PS, a large peak of CH$_2$ was observed as well as for ABS, but an intensity of CH$_3$ relative to CH$_2$ was higher than that in ABS. From PET, peaks of CH$_2$ and CH$_3$ were slightly observed, but the intensities were low as a whole. In PI and PLA, peaks did not appear in this region.

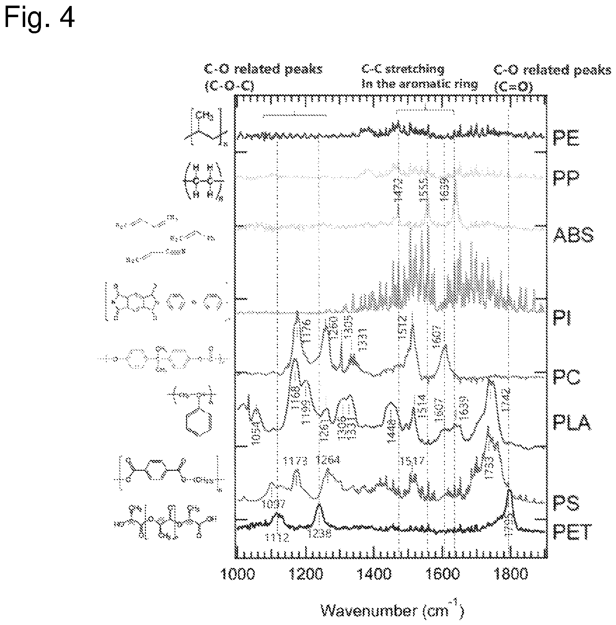

With the use of Figure 4, spectra of each of the carbon-containing gases in the region of wave numbers of 1000 cm$^{-1}$ to 1900 cm$^{-1}$ in Figure 2 are shown. It is known that a peak originating from a C-C bond and a C-O bond appears in a region of wave numbers of 1000 cm$^{-1}$ to 1900 cm$^{-1}$. In ABS, clear peaks appeared in bands of wave numbers of 1472 cm$^{-1}$, 1555 cm$^{-1}$ and 1639 cm$^{-1}$. It is known that these wave numbers are derived from a C-C bond of an aromatic ring, and it is considered that the peaks which have been observed at these wave numbers in ABS are due to a phenyl group of ABS. Similarly, a large number of peaks has appeared in the same bands in PI, and accordingly, it is considered that molecules containing an aromatic ring obtained by decomposition of PI have been converted into a gas and detected. It is known that peaks appear in bands of 1112 cm$^{-1}$ and 1238 cm$^{-1}$ for the C-O bond, and a peak appears in a band of 1795 cm$^{-1}$ for the C=C bond. In PLA, peaks were detected in these bands. This is considered to be because PLA contains both the C-O bond and the C=C bond, and these are vaporized in a state that the bonds have been kept at the time of the thermal decomposition. Also in PET, peaks appear in bands of wave numbers 1112 cm$^{-1}$ and 1238 cm$^{-1}$, and accordingly, it is considered that a gas derived from the C-O bond is generated. In PC, PS and PET, a plurality of peaks appears, and these peaks are considered to be derived from the C-C bond in the aromatic ring. For information, in PE and PP, a remarkable peak did not appear. It is considered that because oxygen or an aromatic ring is not contained in these molecules, the peak does not appear.

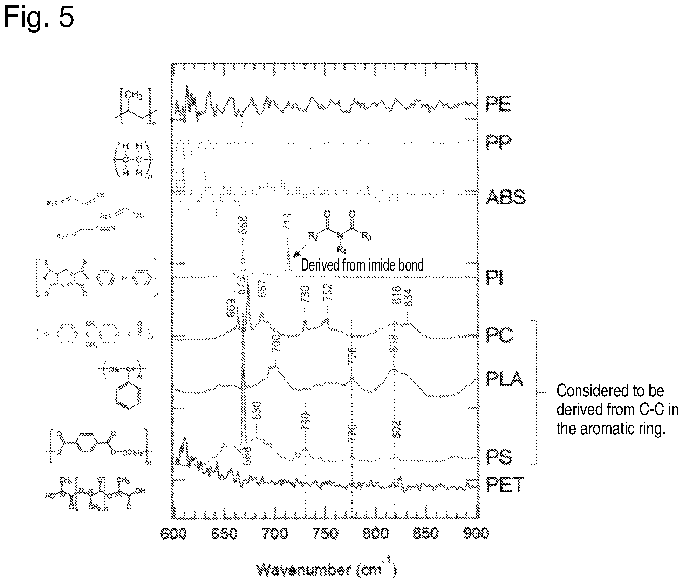

With the use of Figure 5, spectra of each of the carbon-containing gases in the region of wave numbers of 600

cm$^{-1}$ to 900 cm$^{-1}$ in Figure 2 are shown. In PI, PC, PS and PET, a plurality of peaks was observed. The peak at 713 cm$^{-1}$ observed in PI is considered to be derived from an imide bond. In addition, peaks observed in PC, PS and PET are considered to be derived from the C-C bond of the aromatic ring. For information, in PP, PE, ABS and PLA, remarkable peaks were not obtained.

The above is summarized as shown in Table 1.

[Table 1]

| Raw material resin | Generated raw material gas |
| --- | --- |
| PE | Straight-chain alkane molecules such as butane, pentane or hexane |
| PP | In addition to the above, structural isomers such as isobutane and neopentane may be included |
| ABS | Alkene molecules such as ethylene, propylene and butene; and phenyl group |
| PI | Aromatic ring and imide bond |
| PC | Alkane molecule, alkene molecule and aromatic ring |
| PS | Alkane molecule, alkene molecule and aromatic ring |
| PET | Alkane molecule, alkene molecule, carboxylic acid, aldehyde, ketone, or the like |
| PLA | Alkane molecule, alkene molecule, carboxylic acid, aldehyde, ketone, or the like |

It is considered that PE and PP become gases containing molecules or intermediates composed of alkyl chains. In other words, PE is considered to become a gas of a straight-chain alkane such as butane, pentane or hexane. PP has a polymer structure in which $CH_3$ is bonded to a straight-chain alkane, and is considered to become butane, pentane, hexane and the like, which originate from the straight-chain alkane, as well as isobutane and neopentane which are structural isomers thereof; and is also considered to become a cycloalkane having a C-C single bond, for the same reason. In addition, it is also considered that $H_2$ is generated at the time of the decomposition of PE and PP. In addition, there is also a possibility that there exist -$CH_3$ and -$CH_2$ which retains a dangling bond, and an ionized proton.

As for ABS, it is considered that acrylonitrile ($C_3H_3N$), butadiene ($CH_2 = CH-CH = CH_2$) and styrene ($C_8H_8$) themselves, which constitute the polymer, are monomerized or further decomposed and gasified. A different point from PE and PP is that the above three monomers have each a C=C double bond (alkene). In other words, for ABS, it is considered that alkenes such as ethylene ($C_2H_4$), propylene ($C_3H_6$), butene ($C_4H_8$), pentene ($C_5H_{10}$) and hexene ($C_6H_{12}$) exist as gases. In addition, it is considered that these monomers are cracked into a phenyl group, a vinyl group or the like. On the other hand, bonds related to oxygen such as C-O and C=O have not been observed, and carboxylic acid, aldehyde, ketone, alcohol and the like do not exist.

In PI, peaks of the aromatic ring C-C and the imide bond have been mainly obtained, and it is considered that a molecule completely different from PE, PP and ABS is formed. PI has a conjugated structure of an aromatic ring directly bonded by an imide bond, and accordingly has a rigid and strong structure. Accordingly, it is considered that the bond has been broken at the oxygen as a starting point, which bonds the aromatic rings to each other, and a phenyl group has been generated. In addition, it is considered that an intermediate partially containing an imide bond has also been produced at the same time. Like PE and PP, molecules containing -$CH_3$ and/or -$CH_2$ are not produced. As for PC and PS, it is considered that a gas has been obtained which contains a molecule containing -$CH_3$ and/or -$CH_2$ and an aromatic ring, in other words, a gas has been obtained in which gases due to PI and PE/PP are mixed. As for PET and PLA, peaks originating from $CH_3$, $CH_2$ and oxygen were observed.

For information, in any of the raw material resins 144, the peak originating from acetylene was not observed. This can be understood also from the fact that any of the raw material resins 144 does not have a triple bond of CC.

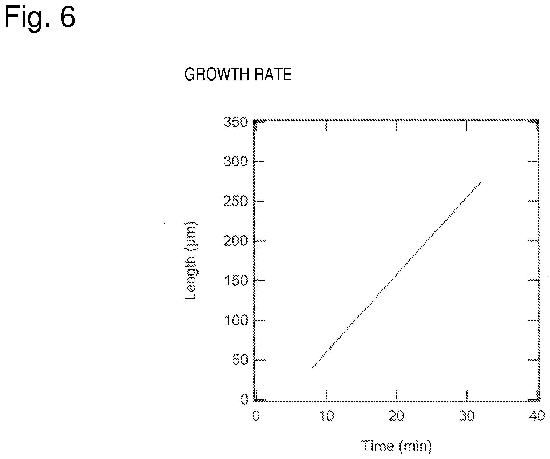

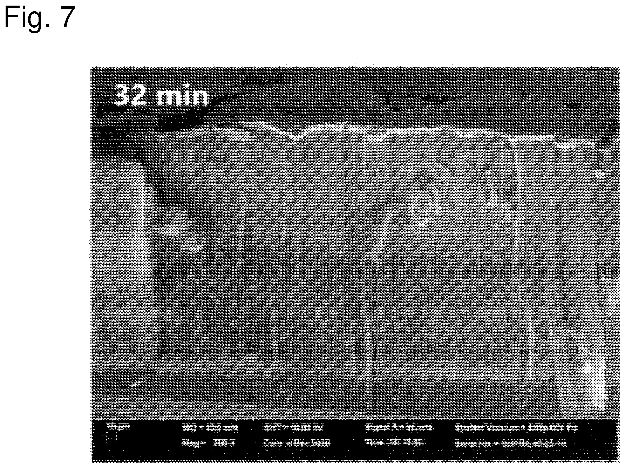

Figure 6 shows a relationship between a time period from a start of introduction of the carbon-containing gas into the quartz tube 130 and a length of the carbon nanotube (CNT), in other words, a growth rate of CNT, at the time when PC has been used as the raw material resin 144; and Figure 7 shows an electron micrograph after 32 minutes after the start of introduction of the carbon-containing gas into the quartz tube 130. Referring to Figure 6, it has been found that the growth rate is about 7 to 8 $\mu$m per minute. Referring to Figure 7, it has been found that thin and linear carbon nanotubes are obtained.

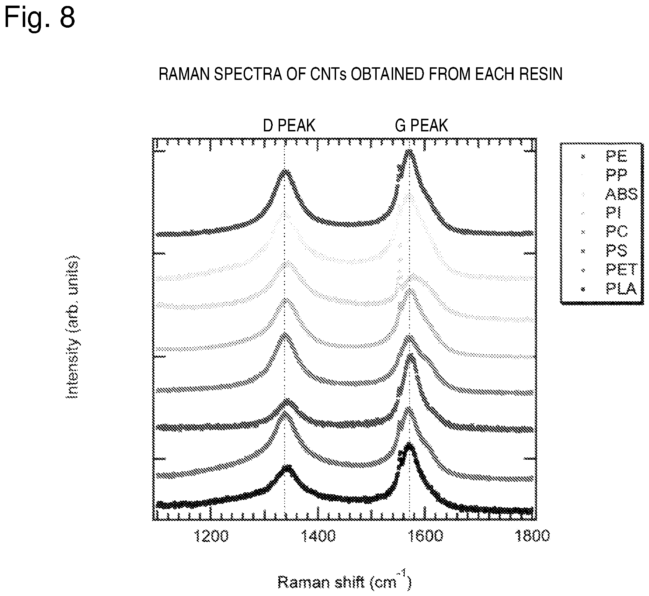

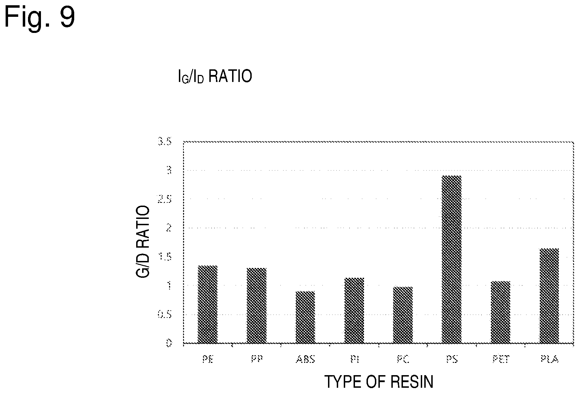

Figure 8 shows the Raman spectra of produced carbon nanotubes, and Figure 9 shows $I_g/I_d$ ratios. Referring to Figure 8, a D peak has been observed at about 1340 cm$^{-1}$, and a G peak has been observed at about 1570 cm$^{-1}$, in any of the raw material resins 144. It has been found that these two peaks are peculiar peaks to the carbon nanotube, and the carbon nanotube is produced according to the present embodiment. Referring to Figure 9, the obtained $I_g/I_d$ ratio has been about 2.9 for PS, 1.0 or larger for PE, PP, PI, PET and PLA, and about 1.0 for ABS and PC. Thereby, it has been found that a high-quality carbon nanotube is produced according to the present embodiment.

Based on the above, a conversion efficiency from the raw material resin 144 to the carbon nanotube by the carbon nanotube manufacturing device and the manufacturing method according to the present embodiment will be described. Firstly, the number of carbon atoms $N_t$ per unit mass of the raw material resin 144 is determined. The number of carbon atoms $N_t$ is determined according to the following equation.

[Math 1]

$$N_t = \frac{N_C N_A}{W_u} W_p$$

, wherein $W_u$ is a molecular weight per unit, $N_C$ is the number of carbon atoms per low molecular unit, $N_A$ is the Avogadro constant ($6.022 \times 10^{23}$/mol), and $W_p$ is an amount of the vaporized raw material resin.

Next, a mass per 1 unit of a low molecule $M_u$ (g/u) is determined, which constitutes the polymer. The mass per unit $M_u$ (g/u) is expressed by $M_u = W_u/N_A$. For example, in the case of PE, the low molecular unit is composed of two C atoms and four H atoms, and accordingly, the molecular weight $W_u$ per unit is 28.1 g/mol·u. Therefore, in PE, the mass per 1 unit of the low molecule $M_u = 4.67 \times 10^{-23}$ g/u.

Next, the number of carbon atoms per unit mass N (atoms/g) is determined. When the number of carbon atoms per low molecular unit is represented by $N_C$ (atoms/u), N is represented by $N_C/M_u$. In the case of PE, $N_c=2$, and accordingly N= $4.27 \times 10^{22}$ atoms/g. Then, the number of carbon atoms $N_t$ in the raw material can be determined as $N_t = N \times W_p$, from the amount of the vaporized raw material resin $W_p$. For example, when 0.3 g of PE has been charged as a raw material of the carbon nanotube, the number of carbon atoms is calculated as $N_t$ (PE) = $1.29 \times 10^{22}$/amount charged (0.3 g). Even though the amount of the vaporized raw material resin is the same, a size of the low molecular unit and the number of carbon atoms per unit differ depending on the type of raw material resin, and accordingly, the number of carbon atoms N per unit mass differs depending on the type of the plastic.

Next, the number of carbon atoms constituting the produced carbon nanotube is determined. The number of carbon atoms $N_{CNT}$ is determined by the following equation.

[Math 2]

$$N_{CNT} = 2\pi\delta LSd \sum_{n=1}^{P} [r_0 - 0.334(n-1)]$$

, wherein $\delta$ indicates the number of carbon atoms per unit axial length and per unit circumferential length (38.12 atoms/nm nm), L (nm) indicates an average length of carbon nanotubes, S (cm²) indicates a growth area, d (nanotubes/cm²) indicates a growing density, $r_0$ (nm) indicates a radius of an outermost shell of multi-walled carbon nanotube (MWNT), P indicates the number of walls of the MWNT, and 0.334 indicates an interwall distance.

From the above equations 1 and 2, the conversion efficiency $\eta$ can be obtained according to the following equation.

[Math 3]

$$\eta = \frac{N_{CNT}}{N_t}$$

The conversion efficiency has been derived from the properties of the carbon nanotube, which have been obtained in the present embodiment. The conversion efficiencies are shown in Table 2.

[Table 2]

| Resin | Conversion efficiency |
|-------|----------------------|
| PE | 45% |
| PP | 57% |
| PET | 2% |

(continued)

| Resin | Conversion efficiency |
|---|---|
| PS | 41% |
| ABS | 46% |
| PVC | 40% |
| PI | 7% |
| PLA | 1% |
| PC | 81% |

According to the present embodiment, a method for manufacturing carbon nanotubes and a carbon nanotube manufacturing device capable of manufacturing carbon nanotubes with a high yield have been obtained. Note that the previously described Patent Literature 1 discloses a yield of about 40, but does not disclose a method of calculating the yield. However, in the present embodiment, yields higher than 4% were obtained by the above yield calculation method, except for PET and PLA. Furthermore, according to the present embodiment, the carbon nanotube can be manufactured without requiring a special step such as preparing a carbon-containing gas and/or a catalyst gas in advance.

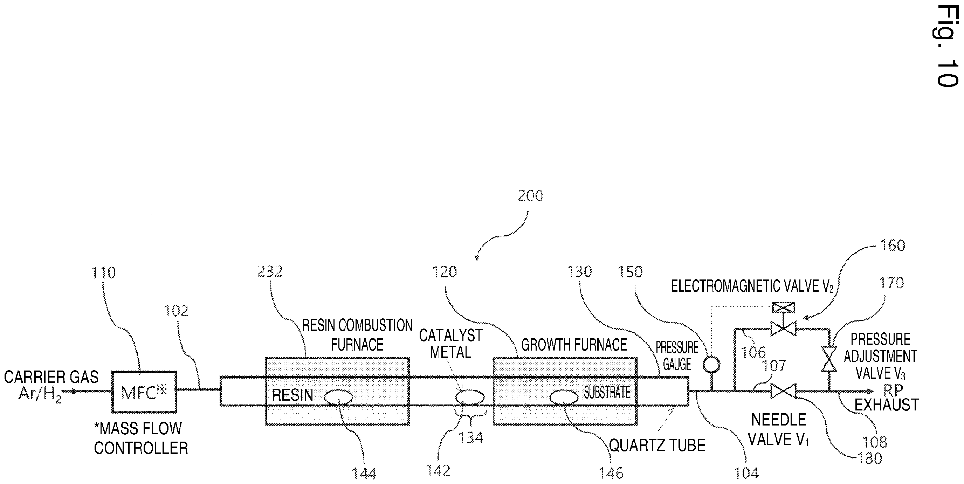

Next, a second manufacturing device 200 according to a second embodiment will be described with reference to Figure 10. The same components as those in the first embodiment are denoted by the same reference numerals, and description thereof will be omitted.

The second manufacturing device 200 mainly includes the mass flow controller 110, the growth furnace 120, the quartz tube 130, a resin combustion furnace 232, the pressure gauge 150, the electromagnetic valve 160, the pressure adjustment valve 170, and the needle valve 180. In the present embodiment, the raw material vaporization section corresponds to the resin combustion furnace 232, and is different from the first embodiment in such a point that the raw material vaporization section is provided as a separate resin combustion furnace 232 instead of being provided near the inlet end of the growth furnace 120. The mass flow controller 110, the growth furnace 120, the pressure gauge 150, the electromagnetic valve 160, the pressure adjustment valve 170 and the needle valve 180 are the same as those in the first embodiment, and accordingly, description thereof will be omitted.

As for the quartz tube 130, the outer diameter, the inner diameter and the radial thickness are the same as those in the first embodiment, but such a length is selected as to correspond to the lengths of and the positional relationship between the resin combustion furnace 232 and the growth furnace 120, in other words, as to extend over the whole lengths of the resin combustion furnace 232 and the growth furnace 120.

In the resin combustion furnace 232, an inside of the furnace can be adjusted to an arbitrary temperature, for example, 400°C which is suitable for the thermal decomposition temperature of each of the raw material resins; and as one example, a product named as ARF-30K is used, which is manufactured by Asahi-rika Co., Ltd. The resin combustion furnace 232 is installed between the inlet pipe 102 and the growth furnace 120.

The raw material resin 144 is placed in the resin combustion furnace 232 to be inside the quartz tube 130. The catalyst metal 142 is made of, for example, ferrocene, and is placed in the quartz tube 130 separated by a predetermined distance from the inlet end of the growth furnace 120.

Next, a process for producing the carbon nanotube will be described, which includes one embodiment of the present invention. In all the steps of this process, a negative pressure is applied to the exhaust pipe 108.

Firstly, the substrate 146 is placed at the center in the longitudinal direction of the quartz tube 130, the raw material resin 144 is placed in the resin combustion furnace 232, and the catalyst metal 142 is placed in the catalyst sublimation section 134. Next, a vacuum drawing process is performed. This process is the same as that in the first embodiment, and accordingly, description thereof will be omitted.

Next, a gas introduction and temperature raising process is performed. In this process, the flow rate in the mass flow controller 110 is set to 300 sccm, the pressure adjustment valve 170 is opened, and the electromagnetic valve 160 is closed. Then, the needle valve 180 is adjusted so that a pressure in the quartz tube 130 becomes -20 kPa. Thereby, the carrier gas Ar/H$_2$ is introduced into the quartz tube 130 and the electromagnetic valve 160 is kept closed. A concentration of the carrier gas Ar/H$_2$ in the quartz tube 130 is about 3%. Then, the resin combustion furnace 232 and the growth furnace 120 each raise the temperature in the furnace. The temperature in the resin combustion furnace 232 is a temperature suitable for the thermal decomposition temperature of each raw material resin, which has been described in the first embodiment. Thereby, the raw material resin 144 is vaporized to become a carbon-containing gas; and the catalyst metal 142 is sublimated to become a catalyst gas, and changes its form into the fine catalyst metal particles.

Next, a growing process is performed. In this process, the needle valve 180 is maintained at the position which has been adjusted in the gas introduction and temperature raising process, and the pressure adjustment valve 170 is maintained in the opened state. As the temperature in the quartz tube 130 rises due to the heating of the resin combustion furnace 232 and the growth furnace 120, the raw material resin 144 and the catalyst metal 142 are thermally decomposed, vaporized and sublimated into a carbon-containing gas and a catalyst gas, respectively, (raw material vaporization step and catalyst sublimation step), and flow toward the substrate 146. At this time, the catalyst gas becomes fine catalyst metal particles in the space of the quartz tube 130, and on the inner wall of the quartz tube 130 and the surface of the substrate 146 (form change step). If only the carbon-containing gas comes into contact with the inner wall of the quartz tube 130 and the substrate 146, in an environment in which the fine catalyst metal particles do not exist, amorphous carbon grows and the production of the carbon nanotube is prevented. Thus, the fine catalyst metal particles are formed on the inner wall of the quartz tube 130 or the surface of the substrate 146, at the same time and/or before the formation of the carbon-containing gas. Here, "the same time" includes, in addition to exactly the same moment, a time period of 0 second to about 240 seconds, which is the period from the time when the catalyst gas has come in contact with the inner wall of the quartz tube 130 and the substrate 146, to the time when the carbon-containing gas comes in contact with the inner wall of the quartz tube 130 and the substrate 146. Along with the vaporization and sublimation of the raw material resin 144 and the catalyst metal 142, the pressure in the quartz tube 130 rises. Here, as previously described, the electromagnetic valve 160 is set so as to automatically open when the pressure value from the pressure gauge 150 becomes -15 kPa or larger with respect to the atmosphere, and so as to automatically close when the value becomes -20 kPa or smaller with respect to the atmosphere. Because of this, when the pressure value measured by the pressure gauge 150 becomes -15 kPa or larger, the electromagnetic valve 160 automatically opens to lower the pressure in the quartz tube 130. In addition, when the pressure in the quartz tube 130 lowers to -20 kPa or smaller, the electromagnetic valve 160 automatically closes. In this way, the pressure in the quartz tube 130 is kept in a range of -15 kPa or higher and -20 kPa or lower. In the present embodiment, the state in which the pressure in the quartz tube 130 is in a range of -15 kPa or higher and -20 kPa or lower is referred to as the pressure in the quartz tube 130 being kept constant. When the growing process is executed for a predetermined period of time, the carbon nanotube is formed and grows on the substrate 146.

When the production of the carbon nanotube is terminated, any one method is acceptable of: stopping carbon-containing gas and then stopping the catalyst gas; simultaneously stopping the carbon-containing gas and the catalyst gas; and stopping catalyst gas and then stopping the carbon-containing gas. In other words, any one method is acceptable of: stopping the resin combustion furnace 232 and then stopping the growth furnace 120; simultaneously stopping the growth furnace 120 and the resin combustion furnace 232; and stopping the growth furnace 120 and then stopping the resin combustion furnace 232. Note that in the case of stopping the catalyst gas and then stopping the carbon-containing gas, it is preferable to stop the supply of the carbon-containing gas within, for example, one hour, after having stopped the catalyst gas. The reason will be described below.

The catalytic ability remains in the catalyst metal contained in the already formed carbon nanotube for a certain period of time, after the supply of the catalyst gas has been stopped, and accordingly when the carbon-containing gas is supplied, the carbon nanotube grows by using the catalytic ability. However, when the catalytic ability decreases, the carbon nanotube is not produced, but amorphous carbon is produced. In the present embodiment, ferrocene is used as the catalyst, and in this case, it may occur that fine Fe particles are generated at a root of the carbon nanotube, and the carbon nanotube grows while regarding the fine particles as seeds. When the carbon-containing gas is supplied after the catalyst gas is not supplied and the catalytic ability has decreased, it may occur that the carbon nanotube is generated using the fine Fe particles as the catalyst, which have been generated and have remained at the root of the carbon nanotube. However, it takes time for the carbon-containing gas to reach the root of the carbon nanotube, and accordingly, there is a possibility that the carbon-containing gas becomes amorphous carbon before reaching the root, and does not reach the root. On the other hand, when nickelocene is used as a catalyst, fine Ni particles are generated (Tip growth) at the tip of the carbon nanotube, and accordingly, there is a possibility that the carbon nanotube is continuously generated if the carbon-containing gas is continuously supplied after the catalyst gas has been exhausted. In view of the above situation, it is preferable to stop the supply of the carbon-containing gas, for example, within one hour before the catalytic ability of the catalyst gas is lost, after the supply of the catalyst gas has been stopped. In addition, it is preferable that the time interval is short between the moment when the raw material resin 144 is converted to a carbon-containing gas and starts to be supplied to the substrate 146 and/or the moment when the carbon-containing gas is brought into contact with the substrate 146, and the moment when the catalyst metal 142 is converted to a catalyst gas and starts to be supplied to the substrate 146 and/or the moment when the catalyst gas is brought into contact with the substrate 146. Consumption of the catalyst metal 142 can be reduced.

According to the present embodiment, the same effects as those of the first embodiment are obtained. In addition, by use of the resin combustion furnace 232, the temperature in the furnace can be set precisely and in a wide range, thereby the resin vaporization temperature can be controlled precisely and in a wide range, and the timing at which the carbon-containing gas is passed into the growth furnace 120 can be controlled more minutely. In addition, the resin combustion furnace 232 tends to have a wider space for placing the raw material resin 144 therein than the raw material vaporization section 132, accordingly, a large amount of the raw material resin 144 can be charged, and thereby the carbon nanotubes can be grown over a long time. By these reasons, according to the present embodiment, a high-quality carbon nanotube can be efficiently produced.

Note that the order of the resin combustion furnace 232 and the catalyst sublimation section 134 may be reversed: and starting from the inlet pipe 102, the catalyst sublimation section 134, the resin combustion furnace 232 and the growth furnace 120 may be arranged in this order. At this time, the distance from the catalyst metal 142 to the inlet end of the resin combustion furnace 232 is such an extent of distance that the catalyst metal 142 can receive such an extent of heat from the resin combustion furnace 232 as to be capable of sublimating.

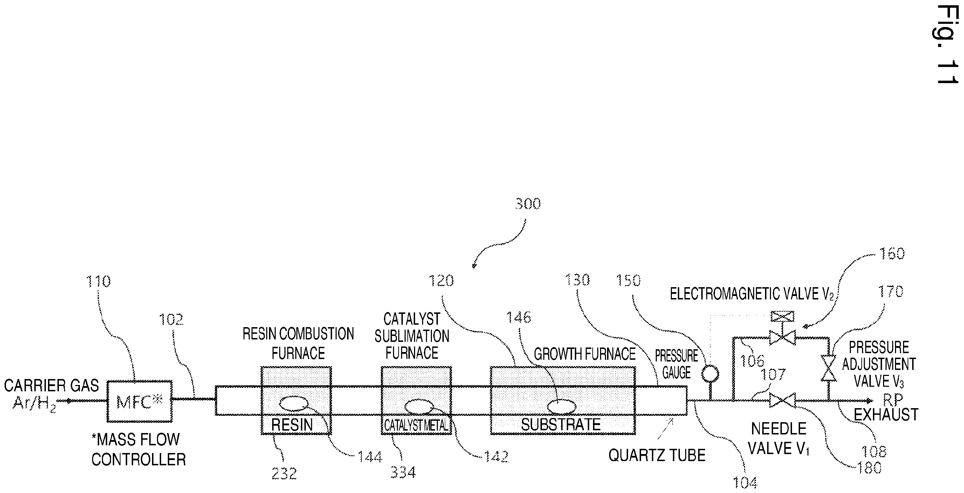

Next, a third manufacturing device 300 according to a third embodiment will be described with reference to Figure 11. The same components as those in the first and second embodiments are denoted by the same reference numerals, and description thereof will be omitted.

The third manufacturing device 300 mainly includes the mass flow controller 110, the growth furnace 120, the quartz tube 130, the resin combustion furnace 232, a catalyst sublimation furnace 334, the pressure gauge 150, the electromagnetic valve 160, the pressure adjustment valve 170, and the needle valve 180. In the present embodiment, the raw material vaporization section corresponds to the resin combustion furnace 232, and is different from the first embodiment in such a point that the raw material vaporization section is provided as a separate resin combustion furnace 232 instead of being provided near the inlet end of the growth furnace 120; and the catalyst sublimation section corresponds to the catalyst sublimation furnace 334, and is different from the first embodiment in such a point that the catalyst sublimation section is provided as a separate catalyst sublimation furnace 334 instead of being provided near the inlet end of the growth furnace 120. The mass flow controller 110, the growth furnace 120, the pressure gauge 150, the electromagnetic valve 160, the pressure adjustment valve 170 and the needle valve 180 are the same as those in the first embodiment, and accordingly, description thereof will be omitted.

As for the quartz tube 130, the outer diameter, the inner diameter and the radial thickness are the same as those in the first embodiment, but such a length is selected as to correspond to the lengths of and the positional relationship among the resin combustion furnace 232, the catalyst sublimation furnace 334 and the growth furnace 120, in other words, as to extend over the respective whole lengths from the resin combustion furnace 232 to the growth furnace 120, through the catalyst sublimation furnace 334.

In the resin combustion furnace 232, an inside of the furnace can be adjusted to an arbitrary temperature, for example, 400°C which is suitable for the thermal decomposition temperature of each of the raw material resins; and as one example, a product named as ARF-30K is used, which is manufactured by Asahi-rika Co., Ltd. The raw material resin 144 is placed in the resin combustion furnace 232 to be inside the quartz tube 130.

In the catalyst sublimation furnace 334, an inside of the furnace can be adjusted to an arbitrary temperature, for example, 150°C, which is suitable for sublimating the catalyst metal; and as one example, a product named as ARF-30K is used, which is manufactured by Asahi-rika Co., Ltd. The catalyst metal 142 is made of ferrocene, for example, and is placed in the catalyst sublimation furnace 334. Starting from the inlet pipe 102, the resin combustion furnace 232, the catalyst sublimation furnace 334 and the growth furnace 120 are installed in this order.

Next, a manufacturing method of the carbon nanotube according to one embodiment of the present invention will be described. In all the steps of this process, a negative pressure is applied to the exhaust pipe 108.

Firstly, the substrate 146 is placed at the center in the longitudinal direction of the quartz tube 130, the raw material resin 144 is placed in the resin combustion furnace 232, and the catalyst metal 142 is placed in the catalyst sublimation furnace 334. Next, a vacuum drawing process is performed. This process is the same as that in the first embodiment, and accordingly, description thereof will be omitted.

Next, a gas introduction and temperature raising process is performed. In this process, the flow rate in the mass flow controller 110 is set to 300 sccm, the pressure adjustment valve 170 is opened, and the electromagnetic valve 160 is closed. Then, the needle valve 180 is adjusted so that a pressure in the quartz tube 130 becomes -20 kPa. Thereby, the carrier gas $Ar/H_2$ is introduced into the quartz tube 130 and the electromagnetic valve 160 is kept closed. A concentration of the carrier gas $Ar/H_2$ in the quartz tube 130 is about 3%. Then, the resin combustion furnace 232, the catalyst sublimation furnace 334 and the growth furnace 120 each raise the temperature in the furnace. The temperature in the resin combustion furnace 232 is a temperature suitable for the thermal decomposition temperature of each raw material resin, which has been described in the first embodiment. A temperature in the catalyst sublimation furnace 334 is a temperature suitable for sublimation of the catalyst metal, which has been described in the first embodiment. Thereby, the raw material resin 144 is vaporized to become a carbon-containing gas, and the catalyst metal 142 is sublimated to become a catalyst gas.

Next, a growing process is performed. In this process, the needle valve 180 is maintained at the position which has been adjusted in the gas introduction and temperature raising process, and the pressure adjustment valve 170 is maintained in the opened state. As the temperature in the quartz tube 130 rises due to the heating of the resin combustion furnace 232 and the growth furnace 120, the raw material resin 144 and the catalyst metal 142 are thermally decomposed, vaporized and sublimated into the carbon-containing gas and the catalyst gas, respectively, (raw material vaporization step and catalyst sublimation step), which flow toward the substrate 146. At this time, the catalyst gas becomes fine catalyst metal particles in the space of the quartz tube 130, and on the inner wall of the quartz tube 130 and the surface of the substrate 146 (form change step). If only the carbon-containing gas comes into contact with the inner wall of the quartz tube 130 and the substrate 146, in an environment in which the fine catalyst metal particles do not exist, amorphous carbon grows and the production of the carbon nanotube is prevented. Thus, the fine catalyst metal particles are formed on the inner wall of the quartz tube 130 or the surface of the substrate 146, at the same time and/or before the formation of the carbon-containing gas. Here, "the same time" includes, in addition to exactly the same moment, a time period of 0 second to about 240 seconds, which is a period from the time when the catalyst gas has come in contact with the inner wall of the quartz tube 130 and the substrate 146, to the time when the carbon-containing gas comes in contact with the inner wall of the quartz tube 130 and the substrate 146. Along with the vaporization and sublimation of the raw material resin 144 and the catalyst metal 142, the pressure in the quartz tube 130 rises. Here, as previously described, the electromagnetic valve 160 is set so as to automatically open when the pressure value from the pressure gauge 150 becomes -15 kPa or larger with respect to the atmosphere, and so as to automatically close when the value becomes -20 kPa or smaller with respect to the atmosphere. Because of this, when the pressure value measured by the pressure gauge 150 becomes -15 kPa, the electromagnetic valve 160 automatically opens and lowers the pressure in the quartz tube 130. In addition, when the pressure in the quartz tube 130 lowers to -20 kPa or smaller, the electromagnetic valve 160 automatically closes. In this way, the pressure in the quartz tube 130 is kept in a range of -15 kPa or higher and -20 kPa or lower. In the present embodiment, the state in which the pressure in the quartz tube 130 is in a range of -15 kPa or higher and -20 kPa or lower is referred to as the pressure in the quartz tube 130 being kept constant. When the growing process is executed for a predetermined period of time, the carbon nanotube is formed and grows on the substrate 146.

When the production of the carbon nanotube is terminated, any one method is acceptable of: stopping the carbon-containing gas and then stopping the catalyst gas; simultaneously stopping the carbon-containing gas and the catalyst gas; and stopping the catalyst gas and then stopping the carbon-containing gas. In other words, any one method is acceptable of: stopping the resin combustion furnace 232 and then stopping the catalyst sublimation furnace 334 and/or the growth furnace 120; simultaneously stopping the growth furnace 120, the resin combustion furnace 232 and the catalyst sublimation furnace 334; and stopping the catalyst sublimation furnace 334 and then stopping the resin combustion furnace 232. Note that in the case of stopping the catalyst gas and then stopping the carbon-containing gas, similarly to the second embodiment, it is preferable to stop the supply of the carbon-containing gas within, for example, one hour, after having stopped the catalyst gas.

According to the present embodiment, the same effects as those of the first and second embodiments are obtained. In addition, by use of the catalyst sublimation furnace 334, the temperature in the furnace can be set precisely and in a wide range, thereby the sublimation temperature of the catalyst metal 142 can be controlled precisely and in a wide range, and the timing at which the catalyst gas is passed into the growth furnace 120 can be controlled more minutely. Sizes of the catalyst metal particles tend to change depending on the amount of the catalyst gas; and accordingly, if the sublimation temperature of the catalyst metal 142 is controlled precisely and in a wide range, the sizes of the catalyst metal particles can be controlled, and thereby, the thicknesses of the carbon nanotubes can be controlled. In addition, the catalyst sublimation furnace 334 tends to have a wider space for placing the catalyst metal 142 therein than the catalyst sublimation section 134, accordingly a large amount of the catalyst metal 142 can be charged, and thereby the carbon nanotubes can be grown over a long time. In addition, the raw material resin 144 is vaporized by use of the resin combustion furnace 232, and the catalyst metal 142 is sublimated by use of the catalyst sublimation furnace 334; and thereby, the timing at which the carbon-containing gas and the catalyst gas are passed into the growth furnace 120 can be controlled more minutely. By these reasons, according to the present embodiment, a high-quality carbon nanotube can be efficiently produced.

Note that the order of the resin combustion furnace 232 and the catalyst sublimation furnace 334 may be reversed: and starting from the inlet pipe 102, the catalyst sublimation furnace 334, the resin combustion furnace 232 and the growth furnace 120 may be arranged in this order.

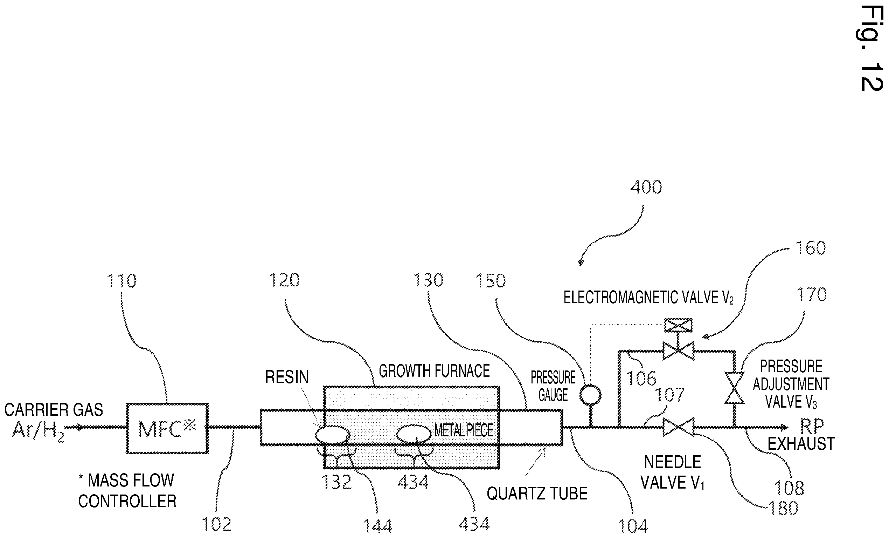

Next, a fourth manufacturing device 400 according to a fourth embodiment will be described with reference to Figures 12 to 14. The same components as those in the first to third embodiments are denoted by the same reference numerals, and description thereof will be omitted.

Referring to Figure 12, a fourth manufacturing device 400 mainly includes the mass flow controller 110, the growth furnace 120, the quartz tube 130, the pressure gauge 150, the electromagnetic valve 160, the pressure adjustment valve 170, and the needle valve 180. The present embodiment is different from the first embodiment in points that the substrate 146 is not used and the carbon nanotube is grown on the inner wall of the growth furnace 120, and that a metal piece 446 is placed in the growth furnace 120 and the catalyst sublimation section 434 is provided in the growth furnace 120. The mass flow controller 110, the growth furnace 120, the pressure gauge 150, the electromagnetic valve 160, the pressure adjustment valve 170 and the needle valve 180 are the same as those in the first embodiment, and accordingly, description thereof will be omitted.

As for the quartz tube 130, the outer diameter, the inner diameter and the radial thickness are the same as those in the first embodiment, but the catalyst sublimation section 134 of the first embodiment is not provided, and accordingly, the length thereof may be shorter than that according to the first embodiment.

The metal piece 446 is made of, for example, ferrocene and/or stainless steel, is placed substantially at the center of the growth furnace 120 in the quartz tube 130, and functions as the substrate and the catalyst. In addition, it is preferable that the form of the metal piece 446 is a metal rod, a metal mesh, a thin film of a transition metal, a bulk, and/or fine particles. In the present embodiment, one part of the inside of the quartz tube 130 in which the metal piece 446 is placed constitutes the catalyst sublimation section 434.

Next, a manufacturing method of the carbon nanotube according to one embodiment of the present invention will be described. In all the steps of this method, a negative pressure is applied to the exhaust pipe 108.

Firstly, the metal piece 446 is placed in the catalyst sublimation section 434 provided at the center in the longitudinal direction of the quartz tube 130, and the raw material resin 144 is placed in the raw material vaporization section 132. Next, a vacuum drawing process is performed. This process is the same as that in the first embodiment, and accordingly, description thereof will be omitted.

Next, a gas introduction and temperature raising process is performed. In this process, the flow rate in the mass flow controller 110 is set to 300 sccm, the pressure adjustment valve 170 is opened, and the electromagnetic valve 160 is closed. Then, the needle valve 180 is adjusted so that a pressure in the quartz tube 130 becomes -20 kPa. Thereby, the carrier gas $Ar/H_2$ is introduced into the quartz tube 130 and the electromagnetic valve 160 is kept closed. A concentration of the carrier gas $Ar/H_2$ in the quartz tube 130 is about 3%. Then, the temperature in the growth furnace 120 is raised. Thereby, the raw material resin 144 is vaporized to become a carbon-containing gas, and the metal piece 446 is sublimated to become a catalyst gas.

Next, a growing process is performed. In this process, the needle valve 180 is maintained at the position which has been adjusted in the gas introduction and temperature raising process, and the pressure adjustment valve 170 is maintained in the opened state. As the temperature in the quartz tube 130 rises due to the heating of the growth furnace 120, the raw material resin 144 and the metal piece 446 are thermally decomposed, vaporized and sublimated into the carbon-containing gas and the catalyst gas, respectively, (raw material vaporization step and catalyst sublimation step), and the carbon-containing gas flows toward the metal piece 446. At this time, the catalyst gas becomes fine catalyst metal particles in the space of the quartz tube 130 and on a surface of the inner wall of the quartz tube 130 (form change step). If only the carbon-containing gas comes into contact with the inner wall of the quartz tube 130, in an environment in which the fine catalyst metal particles do not exist, amorphous carbon grows and the production of the carbon nanotube is prevented. Thus, the fine catalyst metal particles are formed on the surface of the inner wall of the quartz tube 130, at the same time and/or before the formation of the carbon-containing gas. Here, "the same time" includes, in addition to exactly the same moment, a time period of 0 second to about 240 seconds, which is a period from the time when the catalyst gas has come in contact with the surface of the inner wall of the quartz tube 130, to the time when the carbon-containing gas comes in contact with the surface of the inner wall of the quartz tube 130. Along with the vaporization and sublimation of the raw material resin 144 and the metal piece 446, the pressure in the quartz tube 130 rises. Here, as previously described, the electromagnetic valve 160 is set so as to automatically open when the pressure value from the pressure gauge 150 becomes -15 kPa or larger with respect to the atmosphere, and so as to automatically close when the value becomes -20 kPa or smaller with respect to the atmosphere. Because of this, when the pressure value measured by the pressure gauge 150 becomes -15 kPa, the electromagnetic valve 160 automatically opens and lowers the pressure in the quartz tube 130. In addition, when the pressure in the quartz tube 130 lowers to -20 kPa or lower, the electromagnetic valve 160 automatically closes. In this way, the pressure in the quartz tube 130 is kept in a range of -15 kPa or higher and -20 kPa or lower. In the present embodiment, the state in which the pressure in the quartz tube 130 is in a range of -15 kPa or higher and -20 kPa or lower is referred to as the pressure in the quartz tube 130 being kept constant. When the growing process is executed for a predetermined period of time, the carbon nanotube is formed and grows on the metal piece 446.

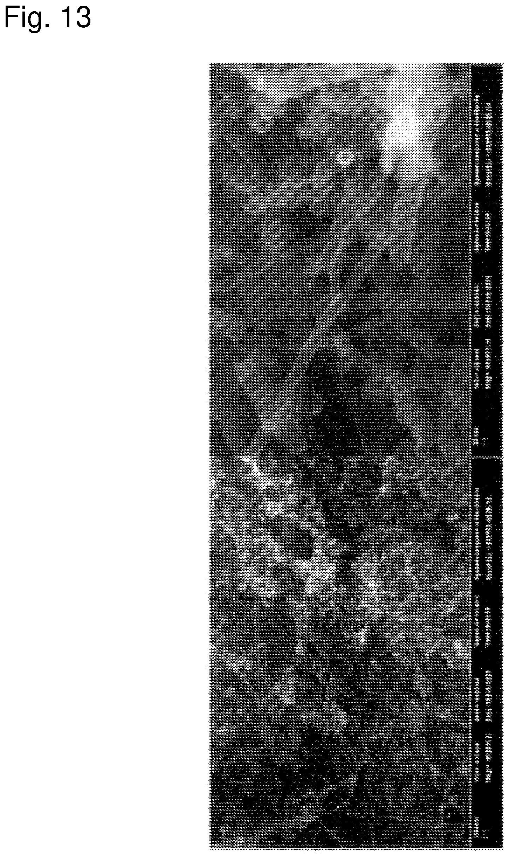

Figure 13 is an electron micrograph of a carbon nanotube which has been formed with the use of a stainless-steel rod as the metal piece 446. It can be understood that the carbon nanotube has grown.

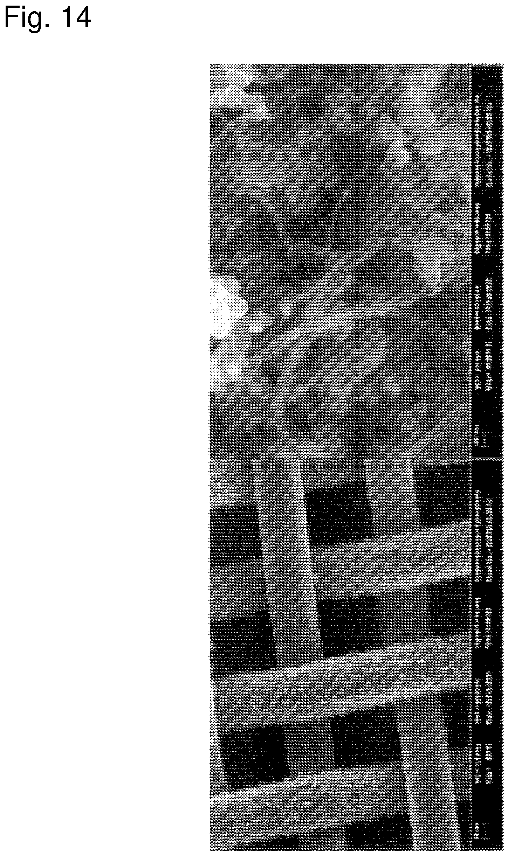

Figure 14 is an electron micrograph of a carbon nanotube which has been formed with the use of a metal mesh made of stainless steel as the metal piece 446. It can be understood that the carbon nanotube has grown.

According to the present embodiment, the same effects as those of the first embodiment are obtained. In addition, the substrate is not required, and accordingly, it is possible to save labor and cost required for preparation.

Note that in the first to third embodiments, it has been described that the carbon nanotube is generated with the use of the substrate 146, but the substrate 146 may not be used. The carbon nanotube grows on the inner wall of the quartz tube 130. In addition, an alumina tube may be used in place of the quartz tube 130.

Note that in any of the embodiments, the carrier gas is not limited to the $Ar/H_2$, and may be pure argon which is a gas containing only Ar, or another inert gas.

Note that in any of the embodiments, the raw material resin 144 is not limited to those previously described, and may also be an AS resin, a methacrylic resin (PMMA), polyamide (PA), polyacetal (POM), modified polyphenylene ether (m-PPE), polybutylene terephthalate (PBT), polyphenylene sulfide (PPS), polyarylate (PAR), polysulfone (PSU), polyethersulfone (PES), polyetheretherketone (PEEK), polyetherimide (PEI), a liquid crystal polymer (LCP), a fluororesin, a thermoplastic elastomer, polymethylpentene (PMP), a biodegradable plastic, a fiber-based plastic, a phenol resin (PF), a urea resin (UF), a melamine resin (MF), an epoxy resin (EP), an unsaturated polyester resin (UP), polyurethane (PU), a diallyl phthalate resin (PDAP), a silicone resin (SI), an alkyd resin, or a combination thereof. In addition, the raw material resin 144 may also be a waste material containing these resins.

Note that in any of the embodiments, the catalyst metal 142 is not limited to those previously described; is preferably an organic metal which contains Fe, Ni, Co, and a combination thereof, for example, nickelocene, cobaltocene, Fe phthalocyanine and Ni phthalocyanine; and is a metal-organic framework (MOF) in which a metal and an organic material are arranged in a lattice form, and/or a material containing Al in these; but is not limited to these.

Note that in any of the embodiments, the temperature of the heat applied to the raw material resin 144, the catalyst metal 142 and the metal piece 446 is not limited to the previously described temperature, and has only to be a temperature at which vaporization and sublimation occur.

Note that the size, shape, quantity and temperature of each member shown in the present specification and the drawings are examples, and are not limited thereto. In addition, the material of each member is an example, and is not limited thereto.

The embodiments of the present invention have been described with reference to the accompanying drawings, but it is self-evident to those skilled in the art that changes may be made in the structure and relationship of each part without departing from the scope and spirit of the invention as described.

Reference Signs List

| 100 | first manufacturing device |
|---|---|
| 110 | mass flow controller |
| 120 | growth furnace (growth section) |
| 130 | quartz tube |
| 150 | pressure gauge |
| 160 | electromagnetic valve |
| 170 | pressure adjustment valve |
| 180 | needle valve |

**Claims**

1. A method for manufacturing carbon nanotubes comprising:

   a raw material vaporization step of vaporizing a resin to obtain a carbon-containing gas;
   a catalyst sublimation step of sublimating a catalyst metal to obtain a catalyst gas;
   a contacting step of bringing the catalyst gas into contact with the carbon-containing gas; and
   a control step of keeping a pressure of a space in which the carbon-containing gas and the catalyst gas exist, within a predetermined range.

2. The method for manufacturing carbon nanotubes according to claim 1, further comprising a form change step of thermally decomposing the catalyst gas to change a form thereof into fine catalyst metal particles.

3. The method for manufacturing carbon nanotubes according to claim 1 or 2, wherein in the contacting step, carbon nanotubes are grown by a chemical vapor deposition method.

4. The method for manufacturing carbon nanotubes according to any one of claims 1 to 3, wherein

   in the raw material vaporization step, the resin is vaporized in a raw material vaporization section;
   in the catalyst sublimation step, the catalyst metal is sublimated in a catalyst sublimation section;
   the space is a growth section; and
   in the control step, a carrier gas is introduced into the raw material vaporization section, the catalyst sublimation section and the growth section, and a pressure in the growth section is kept within a predetermined range.

5. The method for manufacturing carbon nanotubes according to any one of claims 1 to 4, wherein in the raw material vaporization step, the resin is heated at a temperature corresponding to the resin to thermally decompose the resin, and in the catalyst sublimation step, the catalyst metal is heated at a temperature corresponding to the catalyst metal to sublimate the catalyst metal.

6. The method for manufacturing carbon nanotubes according to any one of claims 1 to 5, wherein in the contacting step, a wall surface forming the space is heated to a predetermined temperature, and the carbon nanotubes grow on the wall surface.

7. The method for manufacturing carbon nanotubes according to any one of claims 1 to 6, wherein in the contacting step, a substrate placed in the space is heated to a predetermined temperature, and the carbon nanotubes grow on the substrate.

8. The method for manufacturing carbon nanotubes according to any one of claims 1 to 7, wherein the catalyst metal is an organometallic molecule containing Fe, Ni, Co, or a combination thereof.

9. The method for manufacturing carbon nanotubes according to any one of claims 1 to 8, wherein the resin is any of polyethylene (PE), polypropylene (PP), acrylonitrile-butadiene-styrene (ABS), polystyrene (PS), polylactic acid (PLA), polycarbonate (PC), polyimide (PI), polyethylene terephthalate (PET), polyvinyl chloride (PVC), or a combination thereof.

10. The method for manufacturing carbon nanotubes according to any one of claims 1 to 9, wherein the carbon nanotubes are multi-walled, and the carbon nanotubes in an amount of 1 mass% or more and 81 mass% or less based on the resin grow.

11. A carbon nanotube manufacturing device comprising:

a raw material vaporization section that vaporizes a resin to obtain a carbon-containing gas;
a catalyst sublimation section that sublimates a catalyst metal to obtain a catalyst gas;
a growth section that brings the catalyst gas into contact with the carbon-containing gas; and
a control section that keeps a pressure in the growth section within a predetermined range.

12. The carbon nanotube manufacturing device according to claim 11, wherein the growth section thermally decomposes the catalyst gas to change a form thereof into fine catalyst metal particles.

13. The carbon nanotube manufacturing device according to claim 11 or 12, wherein the growth section grows carbon nanotubes by a chemical vapor deposition method.

14. The carbon nanotube manufacturing device according to any one of claims 11 to 13, wherein the control section introduces a carrier gas into the raw material vaporization section, the catalyst sublimation section and the growth section, and keeps a pressure in the growth section within a predetermined range.

15. The carbon nanotube manufacturing device according to any one of claims 11 to 14, wherein the growth section is provided downstream of the raw material vaporization section and the catalyst sublimation section.

16. The carbon nanotube manufacturing device according to any one of claims 11 to 15, wherein the control section comprises a pressure sensor that detects an internal pressure of the growth section, and a valve that adjusts the internal pressure of the growth section.

17. The carbon nanotube manufacturing device according to any one of claims 11 to 16, wherein in the contacting step, a wall surface forming the growth section is heated to a predetermined temperature, and the carbon nanotubes grow on the wall surface.

18. The carbon nanotube manufacturing device according to any one of claims 11 to 17, wherein in the contacting step, a substrate placed in the growth section is heated to a predetermined temperature, and the carbon nanotubes grow on the substrate.

19. The carbon nanotube manufacturing device according to any one of claims 11 to 18, wherein the catalyst metal is an organometallic molecule containing Fe, Ni, Co, and a combination thereof.

20. The carbon nanotube manufacturing device according to any one of claims 11 to 19, wherein the resin is any of polyethylene (PE), polypropylene (PP), acrylonitrile-butadiene-styrene (ABS), polystyrene (PS), polylactic acid (PLA), polycarbonate (PC), polyimide (PI), polyethylene terephthalate (PET), polyvinyl chloride (PVC), and a combination thereof.

21. The carbon nanotube manufacturing device according to any one of claims 11 to 20, wherein the carbon nanotubes are multi-walled, and the carbon nanotubes in an amount of 1 mass% or more and 81 mass% or less based on the resin grow.

Fig. 1

Fig. 2

Fig. 3

# Fig. 4

Fig. 5

# Fig. 6

GROWTH RATE

Fig. 7

# Fig. 8

RAMAN SPECTRA OF CNTs OBTAINED FROM EACH RESIN

# Fig. 9

I$_G$/I$_D$ RATIO

Fig. 10

Fig. 11

# Fig. 12

## Fig. 13

Fig. 14

## INTERNATIONAL SEARCH REPORT

| International application No. |
|---|
| **PCT/JP2022/013842** |

### A. CLASSIFICATION OF SUBJECT MATTER

*F27D 19/00*(2006.01)i; *C01B 32/162*(2017.01)i
FI:   C01B32/162; F27D19/00 D

According to International Patent Classification (IPC) or to both national classification and IPC

### B. FIELDS SEARCHED

Minimum documentation searched (classification system followed by classification symbols)

F27D19/00; C01B32/162

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/044963 A1 (SUMITOMO ELECTRIC INDUSTRIES, LTD.) 11 March 2021 (2021-03-11)<br>claims, examples, etc. | 1-21 |
| A | JP 2015-44715 A (NATIONAL UNIV. CORP. SHIZUOKA UNIV.) 12 March 2015 (2015-03-12)<br>claims, examples, etc. | 1-21 |
| A | WO 2012/070527 A1 (INCUBATION ALLIANCE, INC.) 31 May 2012 (2012-05-31)<br>claims, examples, etc. | 1-21 |
| A | WO 2013/089222 A1 (SAKAI CHEMICAL INDUSTRY CO., LTD.) 20 June 2013 (2013-06-20)<br>claims, examples, etc. | 1-21 |
| A | JP 2006-104339 A (JFE ENGINEERING KK) 20 April 2006 (2006-04-20)<br>claims, examples, etc. | 1-21 |
| A | JP 2006-36806 A (MUGEN SYSTEM KK) 09 February 2006 (2006-02-09)<br>claims, examples, etc. | 1-21 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/013842**

| Patent document cited in search report | | | Publication date (day/month/year) | Patent family member(s) | | | Publication date (day/month/year) |
|---|---|---|---|---|---|---|---|
| WO | 2021/044963 | A1 | 11 March 2021 | (Family: none) | | | |
| JP | 2015-44715 | A | 12 March 2015 | US | 2016/0207773 | A1 | |
| | | | | claims, examples | | | |
| | | | | WO | 2015/030145 | A1 | |
| | | | | CN | 105492384 | A | |
| WO | 2012/070527 | A1 | 31 May 2012 | US | 2013/0224483 | A1 | |
| | | | | claims, examples | | | |
| | | | | EP | 2644565 | A1 | |
| | | | | CN | 103201215 | A | |
| | | | | KR | 10-2013-0064817 | A | |
| WO | 2013/089222 | A1 | 20 June 2013 | US | 2014/0316018 | A1 | |
| | | | | claims, examples | | | |
| | | | | EP | 2792407 | A1 | |
| | | | | CN | 104080531 | A | |
| | | | | KR | 10-2014-0104486 | A | |
| JP | 2006-104339 | A | 20 April 2006 | (Family: none) | | | |
| JP | 2006-36806 | A | 09 February 2006 | (Family: none) | | | |

Form PCT/ISA/210 (patent family annex) (January 2015)